(19) Europäisches Patentamt
European Patent Office
Office européen des brevets

(11) **EP 3 838 961 A1**

(12) **EUROPÄISCHE PATENTANMELDUNG**

(43) Veröffentlichungstag:
**23.06.2021 Patentblatt 2021/25**

(51) Int Cl.:
**C08G 18/32** *(2006.01)*          **C08G 18/73** *(2006.01)*
**C08G 18/10** *(2006.01)*

(21) Anmeldenummer: **19216788.0**

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **HYDROXY-TERMINIERTES POLYURETHANPREPOLYMER MIT NIEDRIGEM ALLOPHANATGEHALT**

(57) Die vorliegende Erfindung betrifft Hydroxy-terminierte Polyurethanprepolymere die zu mindestens 90 Gew.-% aus dem Reaktionsprodukt der Umsetzung von 1,6-Hexamethylendiisocyanat mit 1,4-Butandiol bestehen und einen Allophanat-Gehalt von ≤ 1,00 Mol-% aufweisen, ein Verfahren zu dessen Herstellung, Zusammensetzungen enthaltend solche Polyurethanprepolymere und die Verwendung dieser Polyurethanprepolymere.

EP 3 838 961 A1

**Beschreibung**

Die vorliegende Erfindung betrifft Hydroxy-terminierte Polyurethanprepolymere die zu mindestens 90 Gew.-% aus dem Reaktionsprodukt der Umsetzung von 1,6-Hexamethylendiisocyanat mit 1,4-Butandiol bestehen und einen Allophanat-Gehalt von ≤ 1,00 Mol-% aufweisen, ein Verfahren zu dessen Herstellung, Zusammensetzungen enthaltend solche Polyurethanprepolymere und die Verwendung dieser Polyurethanprepolymere.

Polyurethanprepolymere sind wichtige Komponenten in der Polyurethanchemie. Als Hydroxy-terminierte Prepolymere werden sie als OH-Komponente kombiniert mit Polyisocyanaten beispielsweise in Zwei-Komponenten Lack- oder Klebstoffsystemen verwendet. Typische Anwendungsgebiete sind Klebstoffe für die Verpackungsindustrie oder auch Systeme zur Beschichtung von Leder oder Textilien (Kunststoff Handbuch Band 7, Polyurethane, G. Oertel, Hanser Verlag, S. 99ff).

Thermoplastische aliphatische Polyurethanprepolymere, die aus kurzkettigen aliphatischen Diolen und aliphatischen Polyisocyanaten aufgebaut sind, weisen wertvolle Eigenschaften auf. Als Hartsegment-Bausteine eignen sie sich hervorragend zur Modifikation diverser Produkte und Werkstoffe. Thermoplastische Polyurethanprepolymere, die einen geringen Gehalt an Allophanatgruppen aufweisen im Vergleich zu vergleichbaren thermoplastischen Polyurethanprepolymeren mit höherem Allophanatgehalt, sind besonders begehrt, da Allophanate die Kristallinität der Hartsegmente herabsetzen. Desweitern kommt durch die Allophanate zu Verzweigungen, die die Fließfähigkeit der Polyurethanprepolymere herabsetzen.

JP4209619A und JP4309516A offenbaren thermoplastische Polyurethanharz-zusammensetzungen mit einem niedrigen Allophanatgehalt. Die Polyurethane weisen sowohl Hart- als auch Weichsegmente auf. Reine Hartsegmentpolyurethane oder Polyurethanprepolymere, insbesondere solche die nur aus aliphatischen Reaktionspartnern aufgebaut sind, werden nicht beschrieben.

JP2010001332A offenbart wässrige Polyurethanharz-Dispersionen mit niedrigem einem niedrigen Allophanatgehalt. Die Polyurethane weisen sowohl Hart- als auch Weichsegmente auf. Reine Hartsegmentpolyurethane oder Polyurethanprepolymere, insbesondere solche die nur aus aliphatischen Reaktionspartnern aufgebaut sind, werden nicht beschrieben.

Problematisch bei der Herstellung von aliphatischen Polyurethanprepolymeren ist, dass aufgrund der hohe Dichte an reaktiven Gruppen, die Polyaddition von kurzkettigen aliphatischen Diolen mit aliphatischen Polyisocyanaten eine hohe Wärmetönung bzw. Reaktionsenthalpie aufweist, was bei unzureichender Wärmeabfuhr zur Beschädigung, bspw. durch eine Verfärbung, bis hin zur Rückbildung von Monomeren und zur Zerstörung (Veraschung) des Polyurethanprepolymers führt. Eine erhöhte Reaktionstemperatur katalysiert außerdem die ungewünschte Allophanatbildung. Diese führt zu verzweigten sowie vernetzten Polymeren.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können. Die Verwendung von Lösungsmitteln ist ebenfalls nachteilig, da im Produkt verbleibende Restlösungsmittel in die Umwelt freigesetzt werden können und unerwünschte Eigenschaften wie beispielsweise Geruch, Toxizität und/oder eine Verschlechterung der mechanischen Eigenschaften verursachen können. Die vollständige Entfernung von Restlösungsmitteln aus einem Polymer ist grundsätzlich mit einem erhöhten technischen Aufwand und Energieverbrauch verbunden.

DE 10 2011 085 944 A1 beschreibt ein Verfahren zur Herstellung von thermoplastischem Polyurethan mit niedrigem Schmelzpunkt in einem Kreislaufreaktor. Die für das Verfahren benötigten hohen Reaktionstemperaturen fördern die Bildung von Allophanaten und erschweren die Abfuhr der Reaktionswärme von Umsetzungen mit hoher Wärmetönung bzw. machen eine Wärmeabfuhr unmöglich.

Ein Verfahren zur Herstellung von Polyurethan ist beispielsweise aus der WO01/14441 bekannt. Offenbart wird ein Verfahren zur Herstellung von NCO-, NH- oder OH-terminierten Polyurethanen in einem Statikmischer. Wesentlich für dieses Verfahren ist, dass die Temperatur bei der Umsetzung der Komponenten adiabat geführt wird und/oder der Statikmischer begleitbeheizt ist und damit nur für Verfahren geeignet ist, die endotherm sind oder nur eine geringe Exothermie aufweisen. Für die Umsetzung von Komponenten, die eine hohe Reaktionsenthalphie aufweisen, d.h. deren Umsetzung miteinander stark exotherm verläuft, ist das Verfahren nicht geeignet.

Nachteilig bei den oben beschriebenen Verfahren ist, dass diese sich eher für Reaktionen eignen, die entweder endotherm verlaufen oder nur eine geringe Wärmetönung aufweisen und daher einen konstanten Wärmeeintrag erfordern oder adiabat gefahren werden müssen. Bei Systemen, die eine hohe Exothermie der Reaktion aufweisen (≤ -350 kJ/kg), ist der adiabatische Temperaturanstieg problematisch. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C über einen längeren Zeitraum ist aufgrund der Vielzahl von thermischen Nebenreaktionen problematisch. Eine Temperatur von 300 °C liegt darüber hinaus oberhalb der Ceiling Temperatur der Polyurethanbindung. Die Ceiling Temperatur ist als die Temperatur definiert, bei der die Depolymerisation im Gleichgewicht mit der Polymerisation steht.

Es ist Aufgabe der vorliegenden Erfindung ein Hydroxy-terminiertes Polyurethanprepolymer bereitzustellen, das zu mindestens 90 Gew.-% aus aliphatischen Bausteinen aufgebaut ist und einen niedrigen Allophanat-Gehalt aufweist, als ein vergleichbares aliphatisches Polyurethanprepolymer sowie ein Verfahren zu dessen Herstellung.

Diese Aufgabe wurde gelöst durch ein Hydroxy-terminiertes Polyurethanprepolymer, dadurch gekennzeichnet, dass das Hydroxy-terminierte Polyurethanprepolymer zu mindestens 90 Gew.-% aus dem Reaktionsprodukt der Umsetzung von 1,6-Hexamethylendiisocyanat mit 1,4-Butandiol besteht, bezogen auf die Gesamtmasse des Hydroxy-terminierten Polyurethanprepolymers und der Allophanat-Gehalt des Hydroxy-terminierten Polyurethanprepolymers, ≤ 1,00 Mol-% beträgt, bezogen auf die Gesamtsumme aller Urethan- und Allophanatgruppen des Hydroxy-terminierten Polyurethanprepolymers, jeweils bestimmt durch NMR-Spektroskopie.

Es wurde überraschend gefunden, dass die erfindungsgemäßen Hydroxy-terminierten Prepolymere einen deutlich geringeren Allophanatgehalt aufweisen, als vergleichbare Hydroxy-terminierten Prepolymere, welche mit einem herkömmlichen Batch-Verfahren hergestellt wurden. Durch den geringen Gehalt an Allophanaten wird die Kristallinität der Hartsegmente weniger stark herabgesetzt. Desweitern kommt durch den geringen Allophanatgehalt zu weniger Verzweigungen, die die Fließfähigkeit der Polyurethanprepolymere herabsetzen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Bevorzugt bedeuten erfindungsgemäß die Ausdrücke "umfassend" oder "enthaltend", "im Wesentlichen bestehend aus" und besonders bevorzugt "bestehend aus".

Der Allophanatkonzentration wurde mittels $^1$H NMR Spektroskopie (Gerät: Bruker AV III HD 600, bei einer Messfrequenz von 600,36 MHz, mit dem Pulsprogramm zg30, bei 64 Scans, einem Relaxationsdelay (D1) von 6 s und TE von 354 K) bestimmt. Hierzu wurde eine Probe des Polyurethanprepolymers in deuteriertem Dimethylsulfoxid (DMSO $d_6$) bei 80°C gelöst und anschließend vermessen. Zur Auswertung des Spektrums wurde die Software MestReNova verwendet. Zunächst wurde eine Basislinienkorrektur (Whittaker Smoother) vorgenommen und anschließend die allophanatspezifischen Protonen der CH2-Gruppe zwischen 3.56 ppm und 3.66 ppm sowie die urethanspezifischen Protonen der O-CH2-Gruppe zwischen 3.84 ppm und 4.04 ppm integriert. Anschließend wurde die Summe der beiden Integrale gebildet und daraus der prozentuale Anteile des Allophanatsignals ermittelt, der dem molaren Anteil der Allophanatgruppen entspricht.

Falls nicht explizit anders angegeben, werden in der vorliegende Erfindung das Zentrifugenmittel der Molmasse $\overline{M}_z$, das Massenmittel der Molmasse $\overline{M}_w$ und das Zahlenmittel der Molmasse $\overline{M}_n$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 μm Chromatographiesäule, dann über eine 300 Å PSS PFG 7 μm Chromatographiesäule und zuletzt über eine 100 Å PSS PFG 7 μm Chromatographiesäule. Als Detektor wurde ein Brechungsindex-Detektor (RI-Detektor) verwendet.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^{\,3}}{\sum_i n_i M_i^{\,2}} \ \text{ in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^{\,2}}{\sum_i n_i M_i} \ \text{ in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Zahlenmittel der Molmasse $\overline{M}_n$ wurde ebenfalls aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Falls nicht explizit anders angegeben, wurden die Schmelzpunkte mittels DSC (Differential Scanning Calorimetry) mit einer DSC 8500 (PerkinElmer, USA) in Anlehnung an DIN-EN-ISO 11357-1 bestimmt. Eine Kalibrierung erfolgte durch die Temperatur des Schmelz-Onsets von Oktan, Indium, Blei und Zink. Es wurden circa 10 mg Substanz Aluminiumtiegel eingewogen. Die Messung erfolgte durch zwei Aufheizungen von -20 °C bis +210 °C bei einer Heizrate von 20 K/min mit anschließender Abkühlung mit einer Kühlrate von 20 K/min. Die Kühlung erfolgte durch einen Kompressorkühler. Als Spülgas wurde Stickstoff verwendet. Die angegebenen Werte basieren jeweils auf der Auswertung der 2. Aufheizkurve.

In einer bevorzugten Ausführungsform liegt der durchschnittliche Polymerisationsgrad n des erfindungsgemäßen Hydroxy-terminierten Polyurethanprepolymers in einem Bereich von 1,5 bis 19, bevorzugt im Bereich von 2 bis 9 und besonders bevorzugt im Bereich von 3,2 bis 6, wobei der durchschnittliche Polymerisationsgrad $n = \frac{x}{1-x}$ ist und wobei $x$ das Verhältnis der NCO-Gruppen der Polyisocyanatmonomere zu den Hydroxy-Gruppen der Polyolmonomere ist, insbesondere wobei $x$ das Verhältnis der NCO-Gruppen der eingesetzten Polyisocyanatmonomere zu den Hydroxy-Gruppen der eingesetzten Polyolmonomere ist.

Vorzugsweise werden als aliphatische Polyisocyanatmonomere aus 1,4-Diisocyanatobutan (BDI), 1,5-Diisocyanatopentan (PDI), 1,6-Diisocyanatohexan (HDI) oder eine Mischung von mindestens zwei hieraus, besonders bevorzugt wird 1,6-Diisocyanatohexan (HDI) eingesetzt.

Vorzugsweise werden als aliphatische Polyolmonomere 1,3-Propandiol, 1,4-Butandiol, 1,6-Hexandiol und / oder Mischungen aus mindestens zwei hieraus, besonders bevorzugt wird 1,4-Butandiol eingesetzt. Bevorzugt werden keine verzweigten Polyolmononere eingesetzt.

In einer bevorzugten Ausführungsform besteht das erfindungsgemäße Hydroxy-terminierte Polyurethanprepolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus dem Reaktionsprodukt der Umsetzung von 1,6-Hexamethylendiisocyanat mit 1,4-Butandiol, bezogen auf die Gesamtmasse des Hydroxy-terminierten Polyurethanprepolymers. Bei der Ermittlung des Anteils des Reaktionsprodukts der Umsetzung von 1,6-Hexamethylendiisocyanat mit 1,4-Butandiol werden nur die polymeren Bestandteile betrachtet, bezogen auf die Gesamtmasse des polymeren thermoplastischen aliphatischen Polyurethanprepolymers.

In einer bevorzugten Ausführungsform liegt der Allophanat-Gehalt des erfindungsgemäßen Hydroxy-terminierten Polyurethanprepolymers in einem Bereich von 0,25 Mol-% bis 1,00 Mol-%, vorzugsweise in einem Bereich von 0,25 Mol-% bis 0,80 Mol-%, besonders bevorzugt in einem Bereich von 0,30 Mol-% bis 0,80 Mol-%, noch bevorzugter in einem Bereich von 0,30 Mol-% bis 0,75 Mol-%, noch mehr bevorzugter in einem Bereich von 0,34 Mol-% bis 0,70 Mol-%, bezogen auf die Gesamtsumme aller Urethan- und Allophanatgruppen des Hydroxy-terminierten Polyurethanprepolymers, bestimmt durch NMR-Spektroskopie.

In einer bevorzugten Ausführungsform weist das erfindungsgemäße thermoplastische aliphatische Polyurethanprepolymer eine aus den Funktionalitäten der Monomere berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 auf.

In einer bevorzugten Ausführungsform liegt das Verhältnis $\overline{M}_w/\overline{M}_n$ des erfindungsgemäßen Hydroxy-terminiertes Polyurethanprepolymers in einem Bereich von 2 bis 20, vorzugsweise in einem Bereich von 2,5 bis 15, besonders bevorzugt in einem Bereich von 4 bis 10, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer weiteren bevorzugten Ausführungsform liegt das Verhältnis $\overline{M}_z / \overline{M}_w$ des erfindungsgemäßen Hydroxyterminiertes Polyurethanprepolymers in einem Bereich von 2,3 bis 5 vorzugsweise in einem Bereich von 2,3 bis 4, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer bevorzugten Ausführungsform weist das erfindungsgemäße Hydroxy-terminierte Polyurethanprepolymer einen Schmelzpunkt von > 150 °C, vorzugsweise einen Schmelzpunkt von > 160 °C, besonders bevorzugt Schmelzpunkt in Bereich von 165 °C bis 190 °C auf, bestimmt mit Differential Scanning Calorimetry gemäß DIN EN 61006 (November 2004).

Ein weiterer Gegenstand der Erfindung betrifft ein Verfahren zur Herstellung eines erfindungsgemäßen Hydroxy-terminierten Polyurethanprepolymers, dadurch gekennzeichnet, dass zumindest 1,6-Hexamethylendiisocyanat mit 1,4-Butandiol zur Reaktion gebracht wird, gegebenenfalls in Gegenwart eines Katalysators und/ oder Hilfs- und Zusatzstoffen, wobei das molare NCO/OH-Verhältnis im Bereich von 0,6 : 1,0 bis 0,95 : 1,0 liegt.

Zusätzlich zu 1,6-Hexamethylendiisocyanat können auch ein oder mehrere andere Polyisocyanate eingesetzt werden, wie beispielsweise aromatische Polyisocyanate, cycloaliphatische Polyisocyanate und / oder araliphatische Polyisocyanate. Insbesondere werden zusätzlich zu 1,6-Hexamethylendiisocyanat ein oder mehrere aliphatische Polyisocyanate eingesetzt die unterschiedlich zu 1,6-Hexamethylendiisocyanat sind.

Geeignete aliphatischen Polyisocyanate sind alle dem Fachmann bekannten aliphatischen Polyisocyanate, insbesondere monomere aliphatische Diisocyanate. Geeignete Verbindungen sind vorzugsweise solche des Molekulargewichtsbereiches von ≥ 140 g/mol bis ≤ 400 g/mol, wobei es unerheblich ist, ob diese mittels Phosgenierung oder nach phosgenfreien Verfahren erhalten wurden. Die Polyisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

In einer bevorzugten Ausführungsform zusätzlich zu 1,6-Diisocyanatohexan ein oder mehrere aliphatische Polyisocyanate eingesetzt ausgewählt aus der Gruppe bestehend aus 1,4-Diisocyanatobutan, 1,5-Diisocyanatopentan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Polyisocyanate eingesetzt. In einer weiteren bevorzugten Aufführungsform wird nur 1,6-Diisocyanatohexan eingesetzt.

Zusätzlich zu 1,4-Butandiol können auch ein oder mehrere weitere Polyole eingesetzt werden. Insbesondere werden zusätzlich zu 1,4-Butandiol ein oder mehrere aliphatische Polyole eingesetzt die unterschiedlich zu 1,4-Butandiol sind und ein Molekulargewicht im Bereich von 62 g/mol bis 210 g/mol, vorzugsweise im Bereich von 62 g/mol bis 120 g/mol aufweisen.

Als weitere aliphatische Polyole eignen sich alle dem Fachmann bekannten organische Diole, die ein Molekulargewicht von 62 g/mol bis 210 g/mol, vorzugsweise Diole, die ein Molekulargewicht im Bereich von 62 g/mol bis 120 g/mol aufweisen. Die Diole und / oder deren Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus. Vorzugsweise werden keinen verzweigten aliphatischen Diole eingesetzt

In einer bevorzugten Ausführungsform sind die weiteren aliphatischen Diole ausgewählt aus der Gruppe bestehend aus 1,2-Ethandiol, 1,2-Propandiol, 1,3-Propandiol, 1,2-Butandiol, 1,3-Butandiol, 1,5-Pentandiol, 1,6-Hexandiol und / oder Mischungen aus mindestens zwei hieraus. In einer weiteren bevorzugten Aufführungsform werden 1,3-Propandiol, 1,6-Hexandiol und / oder Mischungen hieraus als weitere aliphatische Diole eingesetzt. In einer anderen bevorzugten Aufführungsform wird nur 1,4-Butandiol als aliphatisches Diol eingesetzt.

Die Umsetzung der Reaktionspartner zur Erzeugung des erfindungsgemäßen thermoplastischen aliphatischen Polyurethanprepolymers kann in Gegenwart von einem oder mehreren Katalysatoren stattfinden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 Gew.-% bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Als Hilfs- und Zusatzstoffen können beispielsweise im Bereich der Thermoplasttechnologie gängige Hilfs- und Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Hilfs- und Zusatzstoffe eingesetzt. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Hilfs- und Zusatzstoffe mehrerer Typen zu verwenden.

Das erfindungsgemäße Verfahren kann in einen Schlaufenreaktor (Loop-Reactor) oder in einen Mischer beispielsweise in einem Statikmischer durchgeführt werden. Vorzugsweise wird das erfindungsgemäße Verfahren kann in einen Schlaufenreaktor (Loop-Reactor) durchgeführt. Das erfindungsgemäße Verfahren ist vorzugsweise ein kontinuierliches Verfahren.

Das erfindungsgemäße thermoplastische aliphatische Polyurethanprepolymer, welches aus dem erfindungsgemäßen Verfahren erhalten wurde oder erhältlich ist, kann weiterhin noch nichtreagierte Monomere enthalten bzw. neben diesen im Verfahrensprodukt vorliegen. Dies kommt beispielsweise dann vor, wenn ein Monomer, beispielsweise die Diolkomponente, im Überschuss eingesetzt wird. Die Menge an nicht-reagierten Monomeren liegen vorzugsweise in einem Bereich von 0,05 Gew.-% bis 12 Gew.-%, besonders bevorzugt im Bereich von 0,35 Gew.-% bis 9 Gew.-%, noch bevorzugter im Bereich von 0,75 Gew.-% bis 6 Gew.-% jeweils bezogen auf die Gesamtmasse der Zusammensetzung.

In einer bevorzugten Ausführungsform des erfindungsgemäßen Verfahrens wird die Umsetzung in einem Rohrreaktor durchgeführt, vorzugsweise in einem Kreislaufreaktor oder einem Statikmischer, wobei der Rohrreaktor mindestens einen Wärmeübertrager aufweist der kontinuierlich Wärme abführt, wobei die abgeführte Wärme vorzugsweise von 10 % bis 90 %, besonders bevorzugt von 20 % bis 70 %, noch bevorzugter von 25 % bis 60 % der im Rohrreaktor freigesetzten gesamten Reaktionsenthalpie beträgt.

In einer bevorzugten Ausführungsform des erfindungsgemäßen Verfahrens ist das Verfahren lösungsmittelfrei.

Eine weiterer Gegenstand der Erfindung betrifft eine Zusammensetzung enthaltend mindestens ein erfindungsgemäßes Hydroxy-terminiertes Polyurethanprepolymer und mindestens ein Polyol, vorzugsweise ein Diol, besonders bevorzugt Butandiol, noch bevorzugter 1,4-Butandiol.

Eine bevorzugte Ausführungsform der Erfindung betrifft eine Zusammensetzung enthaltend mindestens ein erfindungsgemäßes Hydroxy-terminiertes Polyurethanprepolymer und 1,4-Butandiol, wobei Menge an 1,4-Butandiol in der Zusammensetzung vorzugsweise im Bereich von 0,05 Gew.-% bis 12 Gew.-%, besonders bevorzugt im Bereich von 0,35 Gew.-% bis 9 Gew.-%, noch bevorzugter im Bereich von 0,75 Gew.-% bis 6 Gew.-% liegt, bezogen auf die Gesamtmasse der Zusammensetzung.

Eine weitere bevorzugte Ausführungsform der Erfindung betrifft eine Zusammensetzung enthaltend mindestens ein erfindungsgemäßes Hydroxy-terminiertes Polyurethanprepolymer und mindestens ein Additiv. Als Additive eigenen sich alle oben genannten Zusatzstoffe und Hilfsstoffe.

Eine weiterer Gegenstand der Erfindung betrifft die Verwendung eines erfindungsgemäßen Hydroxy-terminierten Polyurethanprepolymers oder einer erfindungsgemäßen Zusammensetzung zur Herstellung von thermoplastischem Polyurethan und / oder thermoplastischen Polyurethan-Dispersionen, insbesondere zur Herstellung von thermoplastischem Polyurethan.

Eine weiterer Gegenstand der Erfindung betrifft ein Polymer erhältlich durch die Umsetzung von mindestens einem erfindungsgemäßen Hydroxy-terminierten Polyurethanprepolymers oder einer erfindungsgemäßen Zusammensetzung mit mindestens einem Kettenverlängerer, wobei der Kettenverlängerer vorzugsweise ein Polyisocyanat ist.

Vorzugsweise werden das erfindungsgemäße Hydroxy-terminierte Polyurethanprepolymer oder eine erfindungsgemäße Zusammensetzung mit mindestens einem Kettenverlängerer zu einem Polyurethanpolymer umgesetzt. Wenn als Kettenverlängerer ein Polyisocyanate verwendet wird, dann eigen sich alle dem Fachmann bekannten Polyisocyanate, vorzugsweise aliphatische Polyisocyanate, aromatische Polyisocyanate, cycloaliphatische Polyisocyanate und araliphatische Polyisocyanate. Die Umsetzung des Prepolymers mit dem Ketternverlängerer zum Polymer kann beispielsweise in einem Extruder erfolgen.

Ein weiterer Gegenstand der Erfindung betrifft einen Artikel umfassend oder enthaltend ein erfindungsgemäßes Polymer, ein erfindungsgemäßes Hydroxy-terminiertes Polyurethanprepolymer oder eine erfindungsgemäße Zusammensetzung.

Ein weiterer Gegenstand der Erfindung betrifft die Verwendung eines erfindungsgemäßen Polymers zur Herstellung von Formkörpern, Folien und / oder Fasern.

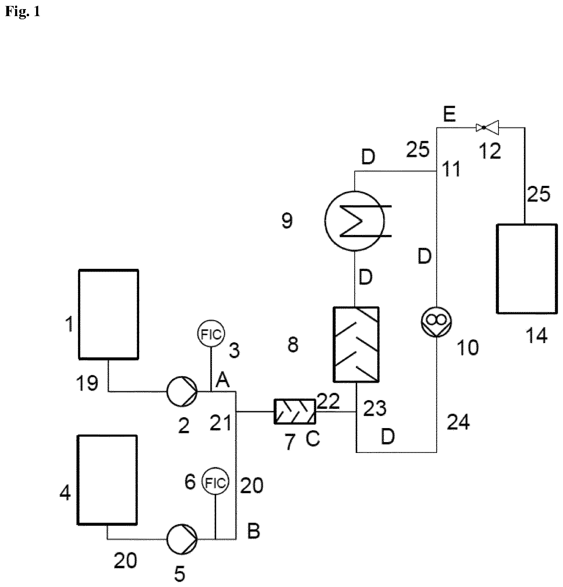

Die vorliegende Erfindung wird im Folgenden anhand der Figuren 1 und 4 näher erörtert. Darin zeigt

Fig. 1 eine bevorzugte Vorrichtung zur Durchführung des erfindungsgemäßen Verfahrens,

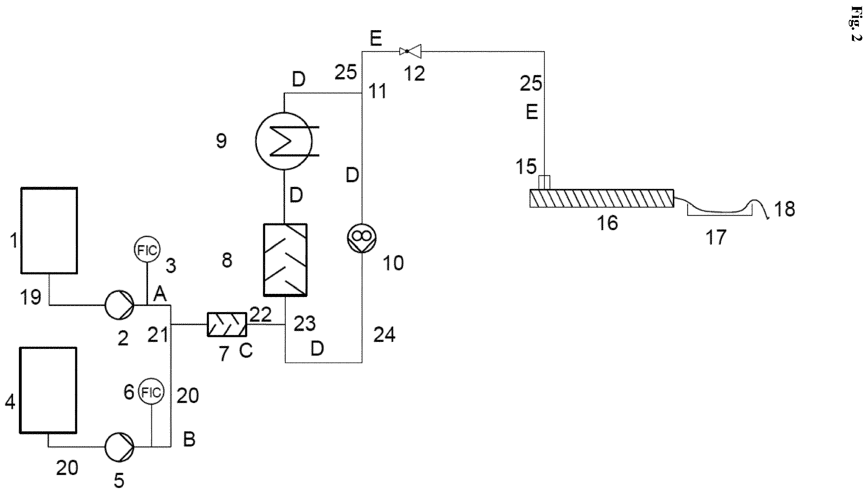

Fig. 2 eine weitere bevorzugte Vorrichtung zur Durchführung des erfindungsgemäßen Verfahrens,

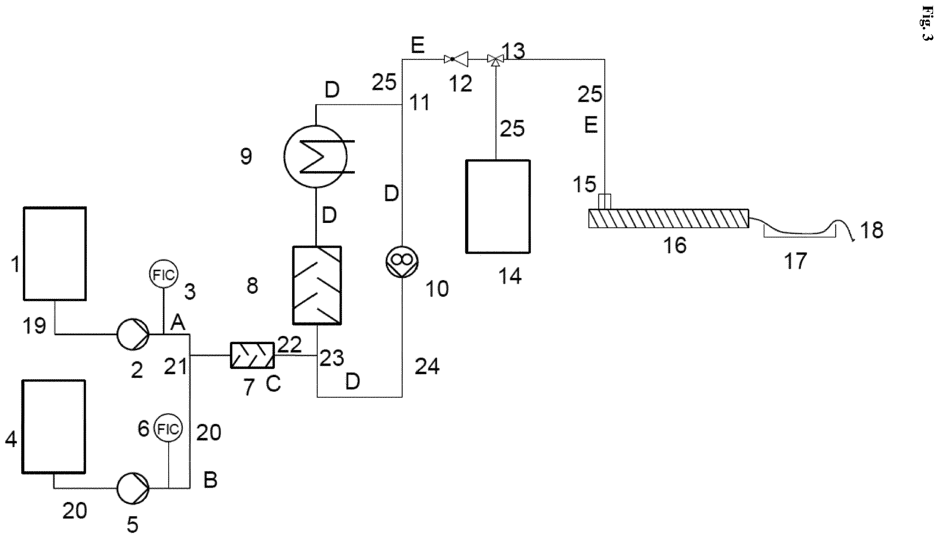

Fig. 3 eine weitere bevorzugte Vorrichtung zur Durchführung des erfindungsgemäßen Verfahrens,

**Beispiele**

Die vorliegende Erfindung wird anhand der nachfolgenden Beispiele weiter erläutert, ohne jedoch darauf beschränkt zu sein.

**Farbwerte**

Die Farbwerte im CIE-Lab Farbraum wurden mit einem Konica Minolta CM 2600d Spektralphotometer, mit der Lichtart D 65, bei 10° Beobachter gemäß DIN EN ISO 11664-1 (Juli 2011) bestimmt.

**Allophanatgehalt**

Der Allophanatkonzentration wurde mittels $^1$H NMR Spektroskopie (Gerät: Bruker AV III HD 600, bei einer Messfrequenz von 600,36 MHz, mit dem Pulsprogramm zg30, bei 64 Scans, einem Relaxationsdelay (D1) von 6 s und TE von 354 K) bestimmt. Hierzu wurde eine Probe des Polyurethanprepolymers in deuteriertem Dimethylsulfoxid (DMSO d₆) bei 80°C gelöst und anschließend vermessen. Zur Auswertung des Spektrums wurde die Software MestReNova verwendet. Zunächst wurde eine Basislinienkorrektur (Whittaker Smoother) vorgenommen und anschließend die allophanatspezifischen Protonen der CH2-Gruppe zwischen 3.56 ppm und 3.66 ppm sowie die urethanspezifischen Protonen der O-CH2-Gruppe zwischen 3.84 ppm und 4.04 ppm integriert. Anschließend wurde die Summe der beiden Integrale gebildet und daraus der prozentuale Anteile des Allophanatsignals ermittelt, der dem molaren Anteil der Allophanatgruppen entspricht.

**Gelpermeationschromatographie:**

Die Molmassen der Polymere wurden mit Hilfe einer Gelpermeationschromatographie (GPC) bestimmt. Dazu wurde die zu vermessende Probe in einer Lösung von 3 g Kaliumtrifluoracetat in 400 Kubikzentimeter Hexafluorisopropanol aufgelöst (Probenkonzentration ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7 μm, 300 Å PSS PFG 7 μm, 100 Å PSS PFG 7 μm in der angegebenen Reihenfolge |
| Entgasung: | Degaser PSS (Polymer Standards Service GmbH) |
| Injektionsvolumen: | 100 Mikroliter |
| Temperatur: | 23 - 25 °C |
| Molmassen-Standard: | Polymethylmethacrylat-Standard-Kit (PSS Polymer Standards Service GmbH) |

**Berechnung von $\overline{M}_z$ und $\overline{M}_w$ und $\overline{M}_n$:**

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \quad \text{in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i} \quad \text{in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist

Das Zahlenmittel der Molmasse ($\overline{M}_n$) wurde ebenfalls aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

## Differential Scanning Calorimetry (DSC)

Schmelzpunkte wurde mittels DSC (Differential Scanning Calorimetry) mit einer DSC 8500 (PerkinElmer, USA) in Anlehnung an DIN-EN-ISO 11357-1 bestimmt. Eine Kalibrierung erfolgte durch die Temperatur des Schmelz-Onsets von Oktan, Indium, Blei und Zink. Es wurden circa 10 mg Substanz Aluminiumtiegel eingewogen. Die Messung erfolgte durch zwei Aufheizungen von - 20 °C bis +210 °C bei einer Heizrate von 20 K/min mit anschließender Abkühlung mit einer Kühlrate von 20 K/min. Die Kühlung erfolgte durch einen Kompressorkühler. Als Spülgas wurde Stickstoff verwendet. Die angegebenen Werte basieren jeweils auf der Auswertung der 2. Aufheizkurve.

## I. Verwendete Rohstoffe

1,6-Hexamethylendiisocyanat (HDI, Reinheit $\geq$ 99 Gew.-%) wurde von der Covestro Deutschland AG bezogen.
1,4-Butandiol (BDO, Reinheit $\geq$ 99 Gew.-%) wurde von der Firma Ashland bezogen.

## Beispiel 1

Aus einer Vorlage wurde 1,6-Hexamethylendiisocyanat (HDI) mittels einer Pumpe bei Raumtemperatur zu einem Statikmischer gefördert (Strom A). Aus einer weiteren Vorlage wurde auf ca. 40 °C temperiertes 1,4-Butandiol (BDO) mittels einer Pumpe ebenfalls zum Durchlaufmischer gefördert (Strom B). Der Durchsatz des HDI-Stroms A und des BDO-Stroms B wurde mittels Massedurchflussmesser verfolgt. Im Mischer 7 wurden der HDI-Strom A und der BDO-Strom B zur Dispersion HDI/BDO vermischt/dispergiert (Strom C).
Der HDI/BDO-Strom C wird im Umlauf mit einem 182 °C heißen Prepolymerstrom D in einem Mischer zusammengeführt und gemischt (Strom E). Durch die Temperatur des Prepolymerstroms D kommt es zu einer Reaktion zwischen HDI und BDO, welche durch weiteres Vermischen in einem temperierbaren Mischer unter Bildung von Prepolymeren und unter Abfuhr der Reaktionswärme fortgeführt wird. Der temperierbare Mischer wird mit Wärmeträgeröl beheizt/gekühlt und weist eine Wärmeaustauschfläche von mindestens 0,4 m$^2$ auf. Die Heizmitteltemperatur am Eintritt beträgt ca. 180 °C. Aus dem temperierbaren Mischer wird ein Ausgangsstrom als weitgehend ausreagierter HDI/BDO-Prepolymerstrom mit einer Temperatur von 183 °C erhalten (Strom E). Der temperierbare statische Mischer war ähnlich aufgebaut wie ein Sulzer SMR-Reaktor mit innenliegenden, gekreuzten Rohren. Er hatte ein Innenvolumen von 2,2 Litern und eine Wärmeaustauschfläche von 0,31 Quadratmeter. Sein Wärmeaustauschvermögen, bezogen auf die Produktseite, betrug unter den Betriebsbedingungen 78 Watt pro Kelvin. Bezogen auf das gesamte Volumen des Kreislaufreaktors von 4 Liter, betrug der Wärmeübergangskoeffizient 19 Kilowatt pro Kubikmeter und Kelvin. Die im Wärmeübertrager abgeführte Wärmemenge betrug ca.890 Watt. Das Verhältnis der Wärmeübertragungsfläche zur Gesamtfläche betrug 0,655. Die mittlere OH-Funktionalität betrug genau 2.Der Strom E wird mittels einer Verzweigung in zwei Teilströme F und G aufgespalten, wobei der Teilstrom F als Prepolymerstrom D mittels einer Pumpe in auf ca. 182 °C beheizten Rohrleitungen zum oben erwähnten Mischer zurückgeführt wird. Der Massenstrom des Stroms G entspricht dem Massestrom des Stroms C. Der Massenstrom des Stroms G betrug ca. 115 L/h. Der Teilstrom G wird in einem 60 L - Fass aufgefangen und abgekühlt. Das entstehende Produkt ist kristallin und weiß. Die Gesamtmenge des hergestellten Prepolymers beträgt 50 kg. Eine Farbzahlmessung ergab einen L-Wert von 92,2, einen a-Wert von 0,7 und einen b-Wert von 1,7. Die Viskosität des Produktes bei 190°C betrug 0,7 Pa s.
Im erfindungsgemäßen Beispiel wurden folgende Edukt-Ströme eingesetzt:

|  | kg/h | Mol/h |
|---|---|---|
| Strom A HDI | 4,367 | 25,965 |
| Strom B BDO | 3,000 | 33,289 |

Das Verhältnis der NCO-Gruppen der Polyisocyanatmonomere zu den Hydroxy-Gruppen der Poylolmonomere betrug $x$ = 0,78. Der Polymerisationsgrad betrug $n$ = 3,55.
Der Allophanat-Gehalt wurde zu 0,34% bestimmt.
Die mittlere Funkionalität der Monomere betrug 2.
$\overline{M}_w$ wurde zu 10810 g/mol bestimmt, $\overline{M}_n$ zu 1404 g/mol und damit ihr Verhältnis 7,7. $\overline{M}_z$ betrug 28940 g/mol

$$\frac{\overline{M_z}}{\overline{M_w}} = 2{,}68.$$

und das Verhältnis

Der Schmelzpunkt betrug 175.5 °C.

Die abgeführte Wärme im Rohrreaktor betrug ca. 57% der dort insgesamt freigesetzten Reaktionsenthalpie.

**Beispiel 2:**

Aus Vorlage 1 wurden 1,49 kg/h HDI mit einer Pumpe 1 (Zahnringpumpe der Firma HNP, MZR 7255) in den Mischer 1 gefördert. Zeitgleich wurden aus Vorlage 2 2,00 kg/h BDO mit einer Pumpe 2 (Firma HNP, MZR 7205) in denselben Mischer gefördert. Bei Raumtemperatur wurden beide Stoffströme im Mischer gemischt. Als Mischer wurde ein Sulzer SMX, Durchmesser 6 mm, Verhältnis von Länge zu Durchmesser L/D = 10 verwendet. Die Mischung wurde anschließend in den auf 150 °C temperierten Reaktor 1 (Typ CSE-X/8G, Form G, Innendurchmesser = 21,0 mm, Länge = 1000 mm der Firma Fluitec) geleitet. Das gewonnene Prepolymer mit dem Verhältnis HDI : BDO von 0,4 : 1,0 wurde anschließend 1,6-Hexamethylendiisocyanat aus der Vorlage 3 (1,49 kg/h; Pumpe 3: Zahnringpumpe der Firma HNP, MZR 7255) im Mischer 2 (Sulzer SMX, Durchmesser 6 mm, Verhältnis von Länge zu Durchmesser L/D = 10) bei 121,44 °C vermischt. Die Mischung wurde anschließend in den bei 182 °C temperierten Reaktor 2 (Typ CSE-X/8G, Form G, Innendurchmesser = 21,0 mm, Länge = 1500 mm der Firma Fluitec) geleitet. Die Verweilzeit im Reaktor 2 betrug 6,5 Minuten. Die Rohrleitungen vom Reaktor 1 zum Reaktor 2 sowie der Mischer 2 wurden auf ca. 180 °C begleitbeheizt. Die Temperaturerhöhung im zweiten Wärmeübertrager betrug 37,93 °C. Die mittlere kalorische Temperatur im Eintritt des ersten Reaktors betrug 25 °C. Die kalorische Temperatur bei der zweiten Zugabe von HDI betrug 121,44 °C, dabei war $c_p$(HDI 2) = 1750,27 J/(kg·K) und $c_p$(Oligomer) = 2000,00 J/(kg·K). Die komplexe Viskosität des Produktes bei 10 Hz und 190 °C betrug 0,15 Pa·s. Die mittlere OH-Funktionalität beträgt 2.

Das Verhältnis der NCO-Gruppen der Polyisocyanatmonomere zu den Hydroxy-Gruppen der Polyolmonomere ist *x* = 0.8. Der durchschnittliche Polymerisationsgrad ist n=4.

Der Allophanat-Gehalt betrug 0,35%.

$\overline{M_w}$ wurde zu 4389 g/mol bestimmt, $\overline{M_n}$ zu 1677 g/mol und damit ihr Verhältnis zu 2,62 . $\overline{M_z}$ wurde zu 8095 g/mol

$$\frac{\overline{M_z}}{\overline{M_w}} = 1{,}84$$

bestimmt und damit das Verhältnis

Der Schmelzpunkt betrug 173 °C

Die im Rohrreaktor abgeführte Wärme war ca. 55% der eingesetzten Wärme.

**Nichterfindungsgemäßes Beispiel:**

In einem Teflonbecher mit Rührer wurden 35,11 g 1,4-Butandiol vorgelegt, mit Stickstoff überschleiert und auf ca 180 °C erhitzt. Unter Rühren wurden nun 55,02 g HDI zugetropft, so dass die Temperatur der Reaktionsmischung 200 °C nicht überschritt (ca. 45 min). Die Viskosität der Mischung stieg dabei stark an. Anschließend wurden die restlichen 9,71 g HDI zugegeben und die Reaktionsmischung zur vollständigen Umsetzung des HDI noch 30 min gerührt. Die Temperatur stieg dabei langsam auf 211 °C an, und die Viskosität erhöhte sich ebenfalls weiter. Das Produkt wurde danach auf Raumtemperatur abgekühlt und vermessen. Der Allophanatgehalt betrug 1.2 %. Einige in DMSO-d6 unlösliche Gelpartikel (Vernetzung) der Probe deuten jedoch auf einen noch höheren Allophanatgehalt hin. Eine GPC wurde auf Grund der Gelpartikel nicht durchgeführt.

**Bezugszeichenliste**

(A)     Polyisocyanatstrom
(B)     Polyolstrom
(C)     Mischungsstrom
(D)     Kreislaufstrom
(E)     Prepolymerstrom
(1)     Polyisocyanat-Vorratsbehälter
(2)     erste Fördereinrichtung
(3)     erster Massendurchflussmesser
(4)     Polyol-Vorratsbehälter
(5)     zweite Fördereinrichtung

(6)    zweiter Massendurchflussmesser
(7)    erste Mischungseinrichtung
(8)    zweite Mischungseinrichtung
(9)    temperierbare Mischungseinrichtung
(10)   temperierbare Fördereinrichtung
(11)   dritte Einmündung
(12)   Druckregelventil
(13)   Dreiwegeventil
(14)   Auffangbehälter
(15)   Entlüftungseinrichtung
(16)   Extruder
(17)   Kühlungseinrichtung
(18)   Zerkleinerungseinrichtung
(19)   Polyisocyanatleitung
(20)   Polyolleitung
(21)   zweite Einmündung
(22)   Kreislaufzuführungsleitung
(23)   dritte Einmündung
(24)   Kreislaufleitung
(25)   Prepolymerzuführungsleitung

**Patentansprüche**

1. Hydroxy-terminiertes Polyurethanprepolymer, **dadurch gekennzeichnet, dass** das Hydroxy-terminierte Polyurethanprepolymer zu mindestens 90 Gew.-% aus dem Reaktionsprodukt der Umsetzung von 1,6-Hexamethylendiisocyanat mit 1,4-Butandiol besteht, bezogen auf die Gesamtmasse des Hydroxy-terminierten Polyurethanprepolymers und der Allophanat-Gehalt des Hydroxy-terminierten Polyurethanprepolymers, ≤ 1,00 Mol-% beträgt, bezogen auf die Gesamtsumme aller Urethan- und Allophanatgruppen des Hydroxy-terminierten Polyurethanprepolymers, jeweils bestimmt durch NMR-Spektroskopie

2. Hydroxy-terminiertes Polyurethanprepolymer nach Anspruch 1, **dadurch gekennzeichnet, dass** der durchschnittliche Polymerisationsgrad $n$ des Hydroxy-terminierten Polyurethanprepolymers in einem Bereich von 1,5 bis 19, bevorzugt im Bereich von 2 bis 9 und besonders bevorzugt im Bereich von 3,2 bis 6 liegt, wobei der durchschnittliche Polymerisationsgrad $n = \frac{x}{1-x}$ ist und wobei $x$ das Verhältnis der NCO-Gruppen der Polyisocyanatmonomere zu den Hydroxy-Gruppen der Polyolmonomere ist.

3. Hydroxy-terminiertes Polyurethanprepolymer nach Anspruch 1 oder 2, **dadurch gekennzeichnet, dass** das Hydroxy-terminierte Polyurethanprepolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des Hydroxy-terminierten Polyurethanprepolymers.

4. Hydroxy-terminiertes Polyurethanprepolymer nach einem der Ansprüche 1 bis 3, **dadurch gekennzeichnet, dass** der Allophanat-Gehalt des Hydroxy-terminierten Polyurethanprepolymers in einem Bereich von 0,25 Mol-% bis 1,00 Mol-% liegt, vorzugsweise in einem Bereich von 0,25 Mol-% bis 0,80 Mol-% liegt, besonders bevorzugt in einem Bereich von 0,30 Mol-% bis 0,80 Mol-% liegt, noch bevorzugter in einem Bereich von 0,30 Mol-% bis 0,75 Mol-% liegt, noch mehr bevorzugter in einem Bereich von 0,34 Mol-% bis 0,70 Mol-% liegt, bezogen auf die Gesamtsumme aller Urethan- und Allophanatgruppen des Hydroxy-terminierten Polyurethanprepolymers, bestimmt durch NMR-Spektroskopie.

5. Hydroxy-terminiertes Polyurethanprepolymer nach einem der Ansprüche 1 bis 4, **dadurch gekennzeichnet, dass** das Hydroxy-terminierte Polyurethanprepolymer eine aus den Funktionalitäten der Monomere berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 aufweist.

**6.** Hydroxy-terminiertes Polyurethanprepolymer nach einem der Ansprüche 1 bis 5, **dadurch gekennzeichnet, dass** das Verhältnis $\overline{M}_w$ / $\overline{M}_n$ des Hydroxy-terminiertes Polyurethanprepolymers in einem Bereich von 2 bis 20 liegt, vorzugsweise in einem Bereich von 2,5 bis 15 liegt, besonders bevorzugt in einem Bereich von 4 bis 10 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

**7.** Hydroxy-terminiertes Polyurethanprepolymer nach einem der Ansprüche 1 bis 6, **dadurch gekennzeichnet, dass** das Hydroxy-terminierte Polyurethanprepolymer einen Schmelzpunkt von > 150 °C aufweist, vorzugsweise einen Schmelzpunkt von > 160 °C aufweist, besonders bevorzugt Schmelzpunkt in Bereich von 165 °C bis 190 °C aufweist, bestimmt mit Differential Scanning Calorimetry gemäß DIN EN 61006 (November 2004).

**8.** Verfahren zur Herstellung eines Hydroxy-terminierten Polyurethanprepolymers nach einem der Ansprüche 1 bis 8, **dadurch gekennzeichnet, dass** zumindest 1,6-Hexamethylendiisocyanat mit 1,4-Butandiol zur Reaktion gebracht wird, gegebenenfalls in Gegenwart eines Katalysators und/ oder Hilfs- und Zusatzstoffen, wobei das molare NCO/OH-Verhältnis im Bereich von 0,6 : 1,0 bis 0,95 : 1,0 liegt.

**9.** Verfahren nach Anspruch 8, **dadurch gekennzeichnet, dass** die Umsetzung in einem Rohrreaktor durchgeführt wird, vorzugsweise in einem Kreislaufreaktor oder einem Statikmischer, wobei der Rohrreaktor mindestens einen Wärmeübertrager aufweist der kontinuierlich Wärme abführt, wobei die abgeführte Wärme vorzugsweise von 10 % bis 90 %, besonders bevorzugt von 20 % bis 70 %, noch bevorzugter von 25 % bis 60 % der im Rohrreaktor freigesetzten gesamten Reaktionsenthalpie beträgt.

**10.** Verfahren nach Anspruch 8 oder 9, **dadurch gekennzeichnet, dass** das Verfahren lösungsmittelfrei ist.

**11.** Zusammensetzung enthaltend mindestens ein Hydroxy-terminiertes Polyurethanprepolymer nach einem der Ansprüche 1 bis 7 und 1,4-Butandiol, wobei Menge an 1,4-Butandiol in der Zusammensetzung vorzugsweise im Bereich von 0,05 Gew.-% bis 12 Gew.-%, besonders bevorzugt im Bereich von 0,35 Gew.-% bis 9 Gew.-%, noch bevorzugter im Bereich von 0,75 Gew.-% bis 6 Gew.-% liegt, bezogen auf die Gesamtmasse der Zusammensetzung.

**12.** Zusammensetzung enthaltend mindestens ein Hydroxy-terminiertes Polyurethanprepolymer nach einem der Ansprüche 1 bis 7 und mindestens ein Additiv.

**13.** Verwendung eines Hydroxy-terminierten Polyurethanprepolymer nach einem der Ansprüche 1 bis 7 oder einer Zusammensetzung nach Anspruch 11 oder 12 zur Herstellung von thermoplastischem Polyurethan und / oder thermoplastischen Polyurethan-Dispersionen.

**14.** Polymer erhältlich durch die Umsetzung von mindestens einem Hydroxy-terminierten Polyurethanprepolymer einem der Ansprüche 1 bis 7 oder einer Zusammensetzung nach Anspruch 11 oder 12 mit mindestens einem Kettenverlängerer, wobei der Kettenverlängerer vorzugsweise ein Polyisocyanat ist.

**15.** Artikel umfassend oder enthaltend ein Polymer nach Anspruch 14, ein Prepolymer nach einem der Ansprüche 1 bis 7 oder eine Zusammensetzung nach Anspruch 11 oder 12.

**16.** Verwendung von einem Polymer nach Anspruch 14 zur Herstellung von Formkörpern, Folien und / oder Fasern.

**Fig. 1**

**Fig. 2**

Fig. 3

**Europäisches Patentamt**
**European Patent Office**
**Office européen des brevets**

## EUROPÄISCHER RECHERCHENBERICHT

Nummer der Anmeldung

EP 19 21 6788

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 068 250 A1 (BAYER AG [DE]) 17. Januar 2001 (2001-01-17) * Ansprüche 1-8; Beispiele 1-10 * * Absatz [0009] * * Absatz [0021] * ----- | 1-16 | INV. C08G18/32 C08G18/73 C08G18/10 |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 30. April 2020 | Sütterlin, Martin |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 6788

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2020

| Im Recherchenbericht angeführtes Patentdokument | Datum der Veröffentlichung | Mitglied(er) der Patentfamilie | Datum der Veröffentlichung |
|---|---|---|---|
| EP 1068250 A1 | 17-01-2001 | AU 1965899 A | 05-07-1999 |
| | | CA 2313456 A1 | 24-06-1999 |
| | | CN 1281474 A | 24-01-2001 |
| | | DE 19755545 A1 | 17-06-1999 |
| | | EP 1068250 A1 | 17-01-2001 |
| | | ES 2196646 T3 | 16-12-2003 |
| | | HK 1033145 A1 | 19-11-2004 |
| | | JP 5185010 B2 | 17-04-2013 |
| | | JP 2002508416 A | 19-03-2002 |
| | | JP 2008260960 A | 30-10-2008 |
| | | KR 20010033041 A | 25-04-2001 |
| | | TW 406099 B | 21-09-2000 |
| | | WO 9931158 A1 | 24-06-1999 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4209619 A
- JP 4309516 A
- JP 2010001332 A
- DE 102011085944 A1
- WO 0114441 A
- DE 2901774 A

**In der Beschreibung aufgeführte Nicht-Patentliteratur**

- Polyurethane. **G. OERTEL.** Kunststoff Handbuch. Hanser Verlag, vol. 7, 99ff
- Polyurethane. **J.H. SAUNDERS ; K.C. FRISCH.** High Polymers. Verlag Interscience, 1962, vol. XVI
- **R. GÄCHTER ; H. MÜLLER.** Taschenbuch für Kunststoff-Additive. Hanser Verlag, 1990